# EUROPEAN PATENT APPLICATION

(11) **EP 3 732 977 A1**
(43) Date of publication of application: **04.11.2020**
(21) Application number: 19171709.9
(22) Date of filing: 29.04.2019
(51) Int. Cl.: A22C 11/00, A22C 18/00

(54) **PRODUCTION SYSTEM WITH COUPLING DEVICE FOR IMPROVED ALIGNMENT OF PROCESSING MACHINES**

(71) Applicant: Poly-clip System GmbH & Co. KG, 65795 Hattersheim (DE)
(72) Inventor: WALDSTÄDT, Manfred, 55124 Mainz (DE); KESSLER, Günter, 60388 Frankfurt am Main (DE)
(74) Representative: Eisenführ Speiser

(57) **Abstract**

The present invention relates to a production system (P) comprising a first processing machine (10), such as a clipping machine for sausage-shaped products, for performing a first processing step on a product to be produced, the production system (P) further comprises a second processing machine (20), such as a loading machine, for performing a second processing step on the product and a coupling device (30) for releasably coupling the first processing machine (10) and the second processing machine (20). The coupling device (30) is configured to at least pre-align a discharging direction (D) of the first processing machine (10) with respect to a feeding direction (F) of the second processing machine (20), and to at least preposition a discharging point (DP) of the first processing machine (10) with respect to a receiving point (RP) of the second processing machine (20).

## Description

The present invention relates in general to a production system having a first and a second processing machine releasably coupled with each other by a coupling device comprising a first and a second coupling assembly, the coupling device including the first and the second coupling assembly, and processing machines each provided with a coupling assemblies of the coupling device.

In particular, the present invention relates to a production system comprising a first processing machine, such as a clipping machine for sausage-shaped products, for performing a first processing step on a product to be produced, wherein the first processing machine discharges the processed product along a discharging direction to a discharging point. The production system further comprises a second processing machine, such as a loading machine, for performing a second processing step on the product wherein the second processing machine has a receiving point for receiving the product discharged from the first processing machine, said product being fed by the second processing machine from the receiving point along a feeding direction, and a coupling device for releasably coupling the first processing machine and the second processing machine. The coupling device comprises a first coupling assembly attached to the first processing machine and a second coupling assembly attached to the second processing machine wherein the coupling device is configured for releasably coupling the first processing machine and the second processing machine such that, when the first coupling assembly and the second coupling assembly are coupled with each other, the discharging direction of the first processing machine and the feeding direction of the second processing machine are at least pre-aligned to each other and the discharging point of the first processing machine and the receiving point of the second processing machine are at least prepositioned to each other.

### BACKGROUND OF THE INVENTION

In practice, it is known that production systems comprise two or more processing machines, which sequentially perform processing steps on a product to be produced. For example, in the production of sausage-shaped products, like sausages, a typical production system comprises a clipping machine as a first processing machine. Filling material is fed through a filling tube of the clipping machine into a tubular or bag-shaped packaging casing which can be stored on said filling tube and which is closed at its front end by a closure clip as a closure means. After a predetermined volume of filling material has been filled into said tubular or bag-shaped packaging casing, a clipping device of the clipping machine then places and closes at least one closure clip at a plait-like portion forming the rear end of the sausage-shaped product. Afterwards, the sausage-shaped product just produced, is separated from the remaining casing material by a cutting device of the clipping machine, is discharged from the clipping machine and transferred to a second processing machine which performs subsequent processing steps on the sausage-shaped products.

Such subsequent processing steps performed by the second processing machine can, for example, comprise of storing the sausage-shaped product on a rod-like element, like a smoking rod, provided in a loading position. Other subsequent processing steps can, for example, comprise of packaging one or more sausage-shaped products in a dedicated packaging. The sausage-shaped products are discharged from the first processing machine in a discharging direction to a discharging point. The second processing machine typically has a feeding direction, along which the sausage-shaped products are subsequently fed by the second processing machine from a receiving point to the processing area of said second processing machine. It is therefore necessary to ensure that the sausage-shaped products discharged from the first processing machine in the discharging direction to the discharging point are reliably passed to the receiving point and the feeding direction of the second processing machine.

In a case when the second processing step performed by the second processing machine includes storing the sausage-shaped products on a rod-like element, it is known that the first processing machine is configured to further attach a suspension element, such as a suspension loop, to the sausage-shaped products. The sausage-shaped products are discharged from the first processing machine in the discharging direction to the discharging point and are then received from the second processing machine at the receiving point and guided with their suspension loop in the feeding direction to be placed over the rod-like element via their suspension loop.

From EP patent application 3 241 447 there is known a production system for producing sausage-shaped products which includes a clipping machine, a discharge device for discharging the sausage-shaped products out of the clipping machine and a feeding device for feeding a rod-like element into a loading position in which the sausage-shaped products are stored or hung on the rod-like element by the discharge device. In the loading position, a free end of the rod-like element engages with a support portion of the discharge device. The discharge device guides or threads the suspension loops of the sausage-shaped products over the free end of the rod-like element, and further conveys the sausage-shaped products along the rod-like element, so as to place them on the rod-like element at predetermined positions where they are suspended on the rod-like element by their respective suspension loop.

Therefore, the position of the support portion of the discharge device has to carefully match the actual position of the end of the rod-like element, which is provided in the loading position on the feeding device. The discharging direction of the discharge device and the feeding direction of the feeding device, being constituted by the longitudinal axis of the rod-like element arranged in the loading position, also have to be carefully oriented relative to each other so as to be parallel, in order to allow reliable placement of the sausage-shaped products at predetermined positions along the rod-like element.

From EP patent application 1 891 859 there is known a transfer device for transferring packaging units, such as sausages discharged from a clipping machine, on a first rod-shaped element to a second rod-shaped element for further processing. The packaging units comprise suspension loops for being arranged in a hanging way, and are discharged from a downstream end of the first rod-shaped element which is arranged upstream of the second rod-shaped element. Collecting means, particularly hooks, are provided, by means of which the retaining loops are retainable and conveyable along the second rod-shaped element, as well as a triggering means is provided in order to trigger the respective collecting means to release the retaining loop.

The hooks travel along a revolving or circulating conveyor chain and each pick up a packaging unit at an upstream end of the transfer device, at which the traveling direction of the hooks reverses. Thus, the position at which the path of the hook intersects with the retaining loop of the packaging unit, which is placed on the first rod-shaped element, constitutes a receiving point. From said point the packaging unit is fed toward the second rod-shaped element along a feeding direction. The position at which the packaging unit is arranged when being picked up by the hook from the first rod-shaped element, the longitudinal axis of which is a discharging direction, therefore constitutes a discharging point.

Therefore, the discharging point of the upstream rod-shaped element has to carefully match the intended receiving point provided by the path of the hooks.

Furthermore, relating to any of the known-production systems, rod-shaped elements should be arranged at least substantially horizontal, for example, to prevent the sausage-shaped products from being dislocated from their predetermined positions by gravitational forces and to ensure safe and reliable operation of the individual components of the involved machines. Further requirements may be present with regard to the orientation of the discharging direction and the feeding direction. For example, the discharging direction and the feeding direction shall be coaxial. Alternatively, spatial considerations with regard to the production facility in which the production system is placed, may require a defined angle between the discharging direction and the feeding direction. The clipping machine and the feeding device should be also arranged substantially horizontally for similar reasons, e.g. to ensure safe and reliable operation of the individual components

Setting up production systems like the aforementioned examples requires extensive alignment work to ensure reliable operation thereof. Besides, when producing sausage-shaped products, like sausages, production facilities typically have inclined production floors to facilitate drainage of liquids, such as water used for cleaning. Thus, every time the production system or its individual machines are moved to a different location in the production facility, or a machine of the production system is switched for another machine, realignment becomes necessary. The machines employed in the known production systems typically comprise undercarriages with multiple wheels for moving the machines on the production floor. The wheels are typically arranged on longitudinally extendable legs, which are then used for adjusting the orientation of the machines, individually and with respect to each other. This process is time-consuming and error-prone.

It is therefore an object of the present invention to enable a production system, such as a production system for producing sausage-shaped products, to be set up in an improved manner, further to provide processing machines which can be set up in an improved manner as part of a production system, and further to provide devices which enable to set-up production systems in an improved manner.

### SUMMARY OF THE INVENTION

According to the present invention there is provided a production system comprising a first processing machine, such as a clipping machine for sausage-shaped products, for performing a first processing step on a product to be produced. The production machine discharges the processed product along a discharging direction to a discharging point. The production system further comprises a second processing machine, such as a loading machine, for performing a second processing step on the product discharged from the first processing machine. The second processing machine has a receiving point for receiving the product discharged from the first processing machine, said product being fed by the second processing machine from the receiving point along a feeding direction. The production system further comprises a coupling device for releasably coupling the first processing machine and the second processing machine. The coupling device comprises a first coupling assembly attached to the first processing machine and a second coupling assembly attached to the second machine. When the first coupling assembly and the second coupling assembly are coupled with each other, the discharging direction of the first processing machine and the feeding direction of the second processing machine are at least pre-aligned to each other, and the discharging point of the first processing machine and the receiving point of the second processing machine are at least prepositioned to each other.

The discharging direction and the feeding direction are at least pre-aligned by coupling the first and second coupling assembly. In the context of the present invention, pre-alignment relates to a relative orientation in three-dimensional space, which is at least in close proximity of a defined final alignment of the discharging direction and the feeding direction. The defined final alignment relates to a relative orientation in three-dimensional space which is intended to be established prior to commencing operation of the production system. The defined final alignment may for example imply that the directions are coaxial, or exhibit any pre-defined angle between the directions, depending on the operational needs of the production system.

Depending on the configuration of the processing machines and the state of a production floor prior to and during coupling, the pre-alignment established by the coupling device can be identical to the final alignment. Coupling in the context of the present invention relates to the act of releasably establishing physical contact between the first and second coupling assembly of the coupling device, such that at least the pre-alignment and the prepositioning are established. In order to facilitate unimpeded coupling, the first coupling assembly of the first processing machine is preferably arranged at a downstream end of the first machine, more preferably at least substantially horizontally extending from a downstream end of the first machine. Correspondingly, the second coupling assembly of the second processing machine is preferably arranged at an upstream end of the second machine, more preferably at least substantially horizontally extending from an upstream end of the second machine.

A discrepancy between the pre-alignment and the final alignment is, for example, typically caused by the interaction between any of an uneven production floor, contact patches of the machines with said production floor, which are typically defined by wheels or feet of an undercarriage, a leverage of the contact patches over an absolute orientation of the machines, which is typically caused by an off-center position of the contact patches, and a possibility to adjust the absolute orientation of the machines, typically by extending and retracting wheels or feet of an undercarriage.

The pre-alignment established by the coupling device is such that, only minor adjustment of the relative orientation of the discharging direction with respect to the feeding direction is necessary to establish the final alignment, thus enabling a time efficient and improved set-up of the production system.

For example, the pre-alignment can be such that, a relative orientation established by the coupling device between the discharging direction and the feeding direction corresponds to the final alignment either in a horizontal plane or in a vertical plane, requiring an adjustment, if any, only in the respective other plane. In other words, in such a case, the coupling device is configured to constrain at least one rotational degree of freedom of the first processing machine with respect to the second processing machine.

Alternatively or additionally, the pre-alignment can be such that, said relative orientation is constrained to provide a limited range of angular motion in at least one of the rotational degrees of freedom of the first processing machine with respect to the second processing machine. In other words, the coupling device is configured to establish a pre-alignment, which provides a relative orientation between the discharging direction and the feeding direction expressed in an angle in a common plane and/or in an inclination angle of the common plane, which differs no more than a predetermined amount from the corresponding angles of the final alignment. Said predetermined amount may be in the range of 0° to 90°, particularly between 0° and 45° or 0° and 30°, particularly between 0° and 15°, more particularly between 0° and 7°, or between 0° and any intermediate angle up to 90°.

For practical purposes, a discharging direction, if not explicitly defined by a linear movement of the discharged product when being discharged from the first processing machine, should be defined by a tangential vector at a suitable point on the curve described by the then non-linear movement of the discharged sausage-shaped product. For example, the suitable point may be the point where the sausage-shaped product loses physical contact to the first processing machine. Said point defines the discharging point of the first processing machine. Similarly, a feeding direction, if not explicitly defined by a linear movement of the product being fed by the second processing machine, should be defined by a tangential vector at a suitable point on the curve described by the then non-linear movement of the product received from the first processing machine. For example, the suitable point may be the point where the product first establishes physical contact with the second processing machine. Said point defines the receiving point of the second processing machine.

It has to be understood that even though the spatial orientation of the first processing machine relative to the second processing machine is mainly defined herein between the discharging direction of the first processing machine and the feeding direction of the second processing machine, the definition is not limited to those directions. As will be detailed below, any two corresponding sections of the first and second processing machines, which unambiguously define a spatial orientation, may be used instead. Particularly, the relative orientation of the machines may, for all practical purposes, be determined between a substantially horizontally aligned section of the first processing machine, in particular when the discharging direction is parallel to said section, and the feeding direction of the second machine, which is preferably easily accessible in the form of a rod-like element.

By coupling the first and second coupling assembly, the discharging point of the first processing machine and the receiving point of the second processing machine are at least prepositioned to each other. The prepositioning of the discharging point and the receiving point is analogous to the pre-alignment of the discharging direction and the feeding direction, in that it relates to a relative spatial position in three-dimensional space of the discharging point to the feeding point, which is located at least in close proximity of a defined final relative position. Thus, only minor adjustment is necessary to the absolute positioning of the respective points to establish the final position.

The final position of the discharging point relative to the receiving point relates to a defined relative spatial position of the two points, which is intended to be established prior to commencing operation of the production system. The final position may for example imply that the points coincide or alternatively exhibit a defined non-zero distance.

Spatial position in the context of the present invention relates to three independent coordinates required to describe the position of an object in three dimensional space. A suitable three-dimensional coordinate system is defined by the three axes of a Cartesian coordinate system, which span up three mutually perpendicular planes. For the context of the disclosure of the present invention, a Cartesian coordinate system is defined so that a first axis coincides with the vector of gravitational acceleration in the vicinity of the production system. Thereby, the coordinate system used to describe the present invention comprises a horizontal plane normal to the first axis, a first vertical plane perpendicular to the horizontal plane and a second vertical plane perpendicular to the horizontal plane and perpendicular to the first vertical plane. An origin of the coordinate system used to describe the present invention may be arbitrarily placed, but it desirably located so as to coincide with a point of either one of the first processing machine, the second processing machine, the coupling device or a production floor on which the production system is set up. In the following, the above defined Cartesian coordinate system will be referred to simply as "the coordinate system".

The three coordinates can then unambiguously describe the spatial position of a rigid-body object when determined for any reference point fixed on the object. In the context of the disclosure of the present invention, the reference points used are preferably the discharging point of the first processing machine and the receiving point of the second processing machine. Alternatively, and for example if the discharging point of the first processing machine and the receiving point of the second processing machine are not inherently defined by the structural features of the machines, the centers of mass of the machines or a suitable point of contact on the first and second coupling assemblies may be used.

A spatial position of the first processing machine relative to the second processing machine thus relates, in the context of the disclosure of the present invention, to the vector connecting a suitable reference point of the first processing machine, and a suitable reference point of the second processing machine. The length of the vector then defines the spatial distance between the two reference points, which can be preferably split into two components, a distance in the horizontal plane of the coordinate system and a distance in a vertical plane of the coordinate system.

As already stated above, the coupling device according to the present invention also arranges the first processing machine and the second processing machine relative to each other in a pre-aligned orientation. Since first and second processing machine constitute anisotropic volumetric bodies, the full definition of their degrees of freedom with respect to each other further requires, in addition to the knowledge of their relative spatial position, a knowledge of their relative orientation. A relative orientation between the two machines is, after a relative spatial position has been determined, suitably defined in terms of a directional vector of the first processing machine and a directional vector of the second processing machine.

Any vector connecting two distinct fixed points of a respective machine would be sufficient to be used as a directional vector. For the sake of completeness, it should be noted, that, in the exceptional case that any of the distinct points used to define the directional vector coincides with the fixed point for determining the relative spatial position, a rotational angle of the machine around the directional vector has to be further defined for full definition of the absolute and relative spatial orientation. An elevation angle of a common plane spanned by the two directional vectors, measured with respect to the horizontal plane of the coordinate system, and an angle between the two directional vectors in said plane then fully defines the relative orientation of the two machines.

Thereby, the relative orientation can be expressed in terms of an azimuth angle in the horizontal plane of the coordinate system, and an inclination angle in a respective vertical plane. The azimuth angle is defined between two vertical planes, which are each spanned by one of the directional vectors and an intersecting vertical vector, the azimuth angle is then measured in the horizontal plane of the coordinate system. The inclination angle is defined between the horizontal plane of the coordinate system and the common plane spanned by the two directional vectors. The inclination angle is then measured in a vertical plane, which is perpendicular to both planes between which it is defined.

Referring again to the prepositioning established by the coupling device, depending on the configuration of the processing machines and the state of a production floor prior to and during coupling, the prepositioning can be identical to the final position.

It has to be understood however, that depending on the nature of the processing machines, the discharging point and/or the receiving point are not predetermined by the structural features of the respective processing machines themselves, but are defined by the interaction of the discharging direction and the feeding direction. Possible configurations include, but are not limited to, parallel offset rod-like elements or product being discharged off of conveyor means onto other conveyor means, which intersect at a defined angle and may possibly be vertically offset. Moreover, the first and second processing machines may be configured to allow a certain tolerance of the relative positioning of the discharging point and the receiving point. Such tolerance may be provided by adjustable third means between first and second processing machine, configured to guide the product from the discharging point to the receiving point. A possible example is a telescopic rod connecting two coaxial rod-like elements or an elastically designed intermediate component. Thus, the defined final position may also be given by a three-dimensional tolerance region. It may consequently suffice in some cases that the coupling device provides only at least a pre-alignment of the discharging direction and the receiving direction. The act of coupling the first and second coupling assembly of the first and second processing machine is then, by itself, already providing a relative spatial positioning sufficient for commencing operation of the production system.

Coupling the first and second coupling assembly at least partially defines the relative spatial positioning of the first and second processing machine in the resulting contact region. The contact region may be defined by one or more planar contacts, line contacts or point contacts, or combinations thereof. Depending on the type of contact region, at least one translational degree of freedom, of the three possible translational degrees of freedom, is defined in the contact region.

Thus, the prepositioning can be such that the coupling device is configured to fully define some or all of the translational degrees of freedom in the contact region. If some translational degrees of freedom are left partially adjustable, the defined final position of the discharging point relative to the receiving point can be reached through a translational movement along some or all of the partially adjustable degrees of freedom, desirably without changing the angular orientation between the discharging direction and the receiving direction. It might be preferable to constrain all three translational degrees of freedom of the first processing machine with respect to the second processing machine within the contact region at least in such way, that they can, for all practical purposes, not unintentionally be displaced.

Furthermore, the discharging point and the receiving point may be located offset from the contact region. Thereby an adjustment of their relative spatial position becomes possible, even if all translational degrees of freedom in the contact region are constrained, given that the coupling device does not constrain all rotational degrees of freedom of the first processing machine relative to the second processing machine. An adjustment of the relative orientation of the discharging direction to the receiving direction then also results in an adjustment of the relative spatial positioning of the discharging point and the receiving point due to the offset from the contact region. Desirably, the coupling device is configured such that the offset-leverage and/or the resulting adjustment of the relative spatial positioning are small or negligible, so that the receiving point and the discharging point remain within a defined tolerance region at all times.

The relevant degrees of freedom may each be at least partially constrained by dedicated separate sections or parts provided by the respective first and second coupling assemblies. The first and second coupling assembly may in their function resemble a kinematic mount, capable of establishing at least a pre-alignment and prepositioning, while providing adjustability to establish a final alignment and a final positioning.

To summarize, the coupling device of the inventive production system, at least partially defines each of the three translational and each of the three rotational degrees of freedom of the first processing machine relative to the second processing machine, by coupling the first and second coupling assembly of the coupling device. If the definition of any or some of the degrees of freedom is only partial, then at least to within such practical boundaries, possible ranges of which have been given above, that at least a pre-alignment of the discharging direction and the feeding direction and at least a prepositioning of the discharging point and the receiving point are established. Thus, to establish a final alignment and a final positioning, only small adjustments, if any, are required. Therefore, the act of setting up the inventive production system is more efficient compared to that of the known production systems.

Without further measures, the two coupled machines are still free to move along a production floor on which the production system is set up, when they are for example provided with transportation means such as a wheeled undercarriage.

During such movement, the coupling device may maintain at least the pre-alignment and prepositioning of the two machines relative to each other.

By releasably coupling the first processing machine and the second processing machine, the coupling device not only arranges both machines, such that a discharging point and a receiving point are at least prepositioned, but said positioning is maintained until the coupling is released. Thereby, a further advantageous aspect of the present invention becomes apparent, namely that both machines may be jointly moved to a new location, while maintaining their relative positioning, at least within the tolerance region of the prepositioning. Therefore, only minor adjustments to the relative positioning, if any, are necessary to commence production in the new location.

By releasably coupling the first processing machine and the second processing machine, the coupling device does not only arrange both machines at a pre-aligned relative orientation, but may maintain at least the pre-alignment until the coupling is released. Thereby, a further advantageous aspect of the present invention becomes apparent, similar to that described in the preceding paragraph above, namely that both machines may be jointly moved to a new location, while maintaining at least the pre-alignment within the degrees of freedom not fully constrained by the coupling device. Therefore, only minor adjustments to the relative orientation, if any, are necessary to commence production in the new location.

Alternatively, the first coupling assembly may be attached to the second processing machine and the second coupling assembly may be attached to the first processing machine. Attachment of the first and second coupling assemblies to the respective machines may be realized by releasable means, such as threaded bolts, by permanent joints, for example by welding, or the first and second coupling assemblies may be integral parts of the respective machines. Further adjustment means may be provided to adjust the orientation of the first and second coupling assemblies with respect to the machines they are attached to.

The first processing machine, the second processing machine and the coupling device are preferably manufactured from food-safe materials, in particular from stainless steel. It further has to be understood that a production system according to the present invention is not limited to producing sausage-shaped products. Establishing at least a pre-alignment and at least a prepositioning by means of a coupling device coupling a first and a second processing machine is advantageous in any production line which sequentially performs processing steps on products to be produced, and in which the products need to be reliably passed from the first processing machine to the second processing machine.

Providing a coupling device according to the present invention, which comprises of a first and a second coupling assembly, enables different individual first and second processing machines to be equipped with first or second coupling assemblies and, thus, different processing machines can form a production system according to the present invention. Hence, it becomes possible to interchange processing machines of the inventive production system, while being able to speedily commence production, since at least the prepositioning and the pre-alignment between the respective machines is maintained. Thus, only minor adjustments, if any, are necessary. Furthermore, by providing first and second coupling assemblies as separate assemblies, existing processing machines can be modified with a coupling device according to the present invention, providing cost savings over the purchase of new machines.

### FURTHER PREFERRED EMBODIMENTS OF THE PRESENT INVENTION

In a further preferred embodiment of the inventive production system, the first coupling assembly comprises a first engagement unit and the second coupling assembly comprises a second engagement unit. The first and second engagement units are configured to engage with each other when the first coupling assembly and the second coupling assembly are coupled to each other, at least for pre-alignment of the discharging direction and the feeding direction, as well as at least for prepositioning of the discharging point and receiving point.

First and second engagement units may provide the full or partial constraint of some or all of the six relative degrees of freedom of the two machines, when engaging with each other. Providing two dedicated engagement units further simplifies the coupling and adjustment process, thus making it more efficient. In a particularly preferred embodiment, only two engagement units are provided. A particular advantage of this preferred embodiment becomes apparent when compared to coupling assemblies comprising multiple engagement units, such as those embodiments of coupling assemblies resembling a kinematic mount. A particular alternative embodiment, wherein the coupling assemblies resemble a kinematic mount, may comprise more than two engagement units. For example, a first coupling assembly may comprise multiple pivotally attached telescopically adjustable bars, the ends of which comprise ball sockets. The ball sockets may then be attached to corresponding ball heads of the second coupling assembly, which fully or partially define a constrained orientation of the bars relative to the ball head. Such an embodiment may be advantageous, when it is desired to independently affect relative degrees of freedom.

First and second engagement units may be designed so as to have shapes configured to physically match or intermesh, the form closure of which constrains at least some relative degrees of freedom at least partially. In other embodiments, the engagement may be achieved by force closure, for example by sufficiently strong magnetic attraction.

In a further preferred embodiment of the inventive production system, the first engagement unit comprises a recess and the second engagement unit comprises a protrusion, and wherein the recess is configured to receive and center the protrusion. A possible design comprises a combination of a male centering taper pivotally attached to the first processing machine and a female centering taper pivotally attached to the second processing machine. Alternatively, splined male and female shafts may be employed, which can be pivotally or rigidly attached to the respective processing machines.

A recess that centers a corresponding protrusion is advantageous in that it automatically aligns the first and second processing machine during the coupling process, at least in that an axis of the recess and the protrusion are coaxial. The protrusion of the first coupling assembly being centered in the recess of the second coupling assembly further constrains at least the two translational degrees of freedom perpendicular to the coaxial axes of the recess and the protrusion. In other embodiments, the recess may be a profiled bore so as to match a profiled protrusion. Thereby, not only a relative spatial position is partially constrained, but also rotation around the common axis defined by the profiled bore and the profiled protrusion.

In a further preferred embodiment of the inventive production system, the recess of the first engagement unit comprises a tapered notch which is preferably provided in a first flat plate. The first flat plate is configured to be arranged at least approximately horizontally and the tapered notch comprises an opening toward an edge of the first flat plate. The protrusion can be a kingpin protruding at least substantially perpendicularly downward from a second preferably flat plate, and the second flat plate is configured to be arranged at least approximately horizontally. The kingpin is configured to be centered in the recess by inserting the kingpin along the tapered notch, and the second flat plate is configured to rest on top of the first flat plate, thereby forming a contact plane.

The tapered notch facilitates coupling of the machines by guiding the kingpin along the tapered notch, enabling fast coupling from a plurality of initial relative orientations of the first and second processing machines. Thus, the opening of the notch is preferably located on the edge of the plate from which faces the second processing machine during coupling. The notch may or may not extend through the entire thickness of the second plate. If the notch does not extend through the entire thickness of the second plate, the matching kingpin's length may be less than the depth of the notch. Alternatively, a separate bore, which extends deeper than the notch, may be provided at the tip of the notch. The separate bore may receive the kingpin, which then has a greater length than the depth of the notch. Alternatively, a matching section formed at and integrally with the tip of the notch may center the kingpin.

The first flat plate is configured to be arranged at least approximately horizontal. Preferably, the first flat plate extends at least approximately horizontally from a downstream end of the first processing machine. Approximately horizontal shall mean that the first flat plate is arranged such that it lies in, or parallel to, a plane of the corresponding processing machine to which the first coupling assembly is attached, which is desirably arranged parallel to the horizontal plane of the coordinate system. Such a plane may, for example, be defined by a bottom panel of the machine. Alternatively or additionally, such a plane may be parallel to a discharging direction or feeding direction. It has to be understood however, that the actual orientation of the first flat plate depends on the adjusted absolute orientation of the machine it is attached to. The second flat plate is also configured to be arranged at least approximately horizontal within the afore defined understanding. Preferably, the second flat plate extends at least approximately horizontally from an upstream end of the second processing machine.

The second flat plate is configured to rest on top of the first flat plate. Thus, the relative orientation of the both machines is defined so as to be parallel in the contact plane of the first and second flat plate. If rotation between the first and second flat plate is prevented, such as by a profiled kingpin and a matching profiled bore in the recess, the relative orientation at least between the two flat plates is thereby fully constrained. Furthermore, by constraining the kingpin's position in the recess, the relative spatial position is fully constrained at least between the two flat plates. Even if the kingpin is not constrained in a direction along its longitudinal axis, for all practical purposes, the portion of the weight of the second machine resting via the first flat plate on the second flat plate, sufficiently inhibits vertical removal of the kingpin. If the coupling assemblies themselves are pivotally or laterally adjustable attached to the respective machines, further adjustment of the relative orientation and position is possible. In alternative embodiments of the present invention, rotation of the plates relative to each other is prevented by friction locking between the two plates. Friction may be sufficiently large due to a portion of the weight of either one of the machines resting on the second flat plate, and/or by friction enhancing properties, such as coating of the contact planes of the plates.

In a further preferred embodiment, the first coupling assembly further comprises extendable feet that are configured to support the load applied to the first coupling assembly by the second coupling assembly. The extendable feet may be extended, such that a significant portion of the weight of the machine to which the first coupling assembly is attached rests on the extendable feet. Such extendable feet may be advantageous, for example, to isolate any attachment means between the first coupling assembly and its respective machine from the flux of load applied to the first coupling assembly. In a further advantageous aspect, the extendable feet may lift the machine off of at least some of any optionally present undercarriage wheels, and thereby prevent unintentional repositioning. Moreover, the extendable feet may aid in the initial positioning and alignment of the machine. For example, they may be used to horizontally level the discharging direction of the first processing machine, prior to coupling the second processing machine.

In a further preferred embodiment of the inventive production system, the production system further comprises final alignment means for arranging and/or fixating the discharging direction of the first processing machine and the feeding direction of the second processing machine relative to each other in a final alignment, when the first coupling assembly and the second coupling assembly are coupled with each other.

Final alignment means are advantageous, for example, when the pre-alignment established by the coupling device is not coincident with the defined final alignment. Final alignment means can, for example, comprise of pivoting hinges between the coupling assemblies and the respective processing machines, which enable an adjustment of the relative orientation between the two machines when they are coupled. Moreover, the final alignment means can be configured to fixate the defined final alignment, for example by locking the pivoting hinges, or by means of detents or notches, configured to catch corresponding locking elements when the desired final alignment is reached.

In a further preferred embodiment of the inventive production system, the final alignment means comprise horizontal alignment means, configured to establish and/or fixate a final alignment of the discharging direction relative to the feeding direction in a horizontal plane; and vertical alignment means, configured to establish and/or fixate a final alignment of the discharging direction relative to the feeding direction in a vertical plane.

In this case, the horizontal and vertical planes correspond to the above described planes, required to express the relative orientation of the discharging direction and the feeding direction in terms of an azimuth angle and an inclination angle. Separate horizontal and vertical alignment means can provide various advantages. For example, it simplifies the process of final alignment when only one of the relative orientations is adjusted at a time. Furthermore, in a typical application of the inventive production system, after relocating the production system on a production floor with inclined segments, only the inclination angle between the relevant directions of the two machines is misaligned, while the azimuth angle is maintained. Thus, only the alignment in the vertical plane has to be adjusted to reestablish the defined final alignment.

In a further preferred embodiment of the inventive production system, the horizontal alignment means comprise at least two pairs of corresponding bores, wherein each pair of the pair of bores comprises a first at least approximately vertical bore in the first flat plate and a second at least approximately vertical bore in the second flat plate. The corresponding first and second bores are configured to be coaxially aligned, such that all of the at least two pairs of bores are coaxially aligned simultaneously. Each pair of the at least two pairs of bores is configured to receive a corresponding alignment pin, configured to removably secure the coaxial alignment of the first and second bore of the pair of bores.

By providing two pairs of corresponding bores, wherein two bores are provided in the first flat plate and two bores are provided in the second flat plate, the relative orientation of the first and second flat plate can be defined within their contact plane. With respect to the pairs of bores, at least approximately vertical shall mean that they are substantially vertically extending through the first and second flat plates, when the first and second flat plates are arranged substantially horizontally. The actual absolute orientation of the bores depends, inter alia, on the current orientation of the first and second processing machines. The bores in the first flat plate are arranged such that both bores can be coaxially aligned with the two corresponding bores in the second flat plate. Thereby, a final alignment of the machines in the contact plane of the first and second flat plate is defined. Inserting the matching locking pins into the coaxially aligned pairs of bores then prevents further rotation. The locking pins may be configured to be removed for releasing the coupling. When the contact plane is parallel to the horizontal plane of the coordinate system, the alignment of the discharging direction and the feeding direction in the horizontal plane can thus be fully constrained, corresponding to the defined final alignment in the horizontal plane. Moreover, the locking pins constrain a relative translational movement of the first and second flat plates within their contact plane. Thereby, a final positioning between the discharging point and the receiving point is defined, at least within the contact plane of the first and second flat plates.

In a further preferred embodiment of the inventive production system, the vertical alignment means comprise a tilt-axis and an adjustment mechanism. The tilt-axis is preferably arranged in a at least approximately horizontal plane and further preferably arranged so as to be perpendicular at least to a projection of the discharging direction and/or feeding direction in the approximately horizontal plane. The tilt-axis is attached to the first coupling assembly, such that the first flat plate is tiltable around the tilt axis with respect to the first processing machine. The adjustment mechanism is configured to adjust a tilt angle of the first flat plate with respect to the horizontal plane, thereby adjusting the orientation of the discharging direction relative to the feeding direction in a vertical plane. Preferably, the tilt-axis is arranged such that it is situated below the final position of the discharging point, i.e. an axis vertically extending from the tilt-axis intersects the discharging point. More preferably, the tilt-axis is situated, such that it is situated below the final position of the receiving point. The discharging point and the receiving point then coincide, when the feeding direction and the discharging direction are aligned in a vertical plane.

Approximately horizontal shall mean that the tilt-axis is arranged such that it lies in, or parallel to, a plane of the corresponding machine to which the first coupling assembly is attached, which is desirably arranged parallel to the horizontal plane of the coordinate system. Such a plane may, for example, be defined by a bottom panel of the machine. It has to be understood however, that the actual orientation of the plane within which the axis of the first flat plate lies, depends on the adjusted absolute orientation of the machine it is attached to. The tilt-axis is further perpendicular to at least a projection of the discharging direction and/or feeding direction in the approximately horizontal plane. Rotation around the tilt-axis therefore adjusts the relative positioning of the discharging and feeding direction solely in a vertical plane.

Thereby, in a coupled state, the vertical alignment between discharging direction and feeding direction can be adjusted by means of the adjustment mechanism, independent from and without interfering with the relative alignment in the contact plane of the second flat plate. Furthermore, the relative positioning in the contact plane is left unchanged by the adjustment of the vertical alignment. Thus, a final alignment in the vertical plane can speedily be achieved without displacing a potentially pre-established final alignment in the horizontal plane.

The ability to tilt around the approximately horizontal axis may also aid in the coupling process of first and second processing machine, in particular when the vertical position of the second flat plate is closer to the floor than that of the first flat plate prior to coupling. The first flat plate can then tilt out of its substantially horizontally aligned position toward the second coupling assembly and provide an inclined ramp for the second flat plate to slide onto during coupling. The tilt-axis being arranged perpendicular to the discharging direction and/or processing or handling direction, may further aid in aiming the machine, to which the second coupling assembly is attached to, at the first coupling assembly.

In a further particularly advantageous aspect, regions of the first and second processing machine which are configured to be spatially positioned with respect to each other, such as the discharging point and the receiving point, are desirably positioned to be approximately arranged in a horizontal plane defined through the tilt-axis of the first flat-plate, with a desirably small vertical distance to the tilt-axis. Thereby, the effect of the leverage of the rotation around the tilt-axis on the spatial relative positioning of the respective regions of the machines can be neglected in good approximation. Such an embodiment allows to establish the defined final alignment in the vertical plane, without dislocating the discharging point and the receiving point from their defined final relative positioning. This might be particularly advantageous when the configuration of the first and second processing machines require a precise relative positioning. It might not be necessary, but still optionally be included in other configurations, within which a greater tolerance of the relative positioning of the discharging point and the receiving point is allowable.

In a further preferred embodiment of the inventive production system, the adjustment mechanism comprises an extendible foot, at least approximately vertically aligned and attached to a downstream end of the second processing machine. Preferably only a single extendible foot is provided. The single extendible foot is at least approximately arranged in a vertical plane, which is perpendicular to the tilt axis and within which a center of mass of the second machine is located.

Such an embodiment may be advantageous, for example, when the second coupling assembly of the second processing machine is coupled to the first coupling assembly of the first processing machine, and a significant portion of the weight of the second machine rests on the first flat plate. Then, the second processing machine can be rotated around the tilt-axis of the first flat plate to adjust the orientation of the second processing machine with respect to the first processing machine, by extending or retracting the extendable foot. Preferably, the second coupling assembly is arranged at an upstream end of the second machine, when the extendible foot is attached to a downstream end of the machine, such that the center of mass of the second machine lies therebetween. In a particularly preferred embodiment, the extendable foot is arranged, such that it approximately arranged within a vertical plane, which is perpendicular to the tilt axis and within which a center of mass of the second machine is located. Thereby, a roll moment around a longitudinal axis of the second machine can be suppressed, which makes it possible to adjust the orientation of the second machine around the tilt-axis of the first flat plate, and thereby establish a final alignment of the first and second processing machine in a vertical plane, by means of a single foot only. During operation of the second machine, the center of mass may shift, for example due to sausage-shaped products being loaded onto a smoking rod of the second machine. However, the lateral extent of the first and second flat plates is able to absorb some roll moment. Furthermore, a width of the contact patch of the extendible foot on the floor is also able to absorb some roll moment.

In a further preferred embodiment of the inventive production system, the production system further comprises fixation means, configured to at least partially maintain at least the pre-alignment of the discharging direction with respect to the feeding direction and/or to at least partially maintain at least the prepositioning of the discharging point with respect to the receiving point.

Such fixation means may be advantageous in embodiments of the present invention, when the coupling device establishes the pre-alignment and prepositioning of the machines, such that they may accidentally be released. Furthermore, they may be advantageous to maintain the pre-alignment until the final alignment means fixate the final alignment. Alternatively, such fixation means may be advantageous as an additional safety measure.

Such fixation means may comprise an arresting hook, configured to engage and hold the protrusion in place within the recess. Thereby at least the pre-positioning of the first processing machine and the second processing machine is fixated at least in the contact plane of the first and second flat plate. Such an arresting hook is particularly advantageous when the recess is tapered and open towards an end of the second flat plate. The relative spatial position between the two machines is then defined by the protrusion abutting the end of the recess, while the protrusion might still be able to slide back out of the recess along the direction of the taper. The arresting hook engages and fixates the protrusion, thereby preventing the protrusion from sliding out of the recess and fixating the relative spatial position at least in the contact plane of the first and second flat plates. The relative spatial position fixated by the arresting hook defines at least the pre-positioning at least in the contact plane. In some instances, said pre-positioning may equate to the final position, or be provide sufficient placement within the tolerance region for the discharging point and the receiving point. A circular protrusion engaged by a circular profiled hook might still be able to be removed from the recess in a direction perpendicular to the contact plane of the first and second flat plate. In an alternative embodiment, the protrusion may for example comprise a notch configured to be engaged by a matching pin of the hook, thereby further preventing the protrusion from being removed in a direction perpendicular to the contact plane of the first and second flat plate.

The fixation means may further comprise at least one clamp, configured to maintain planar contact between the first and second flat plates, thereby fixating at least a parallel alignment of the first and second flat plates. Thus the clamp may maintain at least a pre-alignment in a plane perpendicular to the contact plane. The clamp may be C-shaped and configured to engage the bottom surface of the second flat plate and the top surface of the first flat plate, effectively preventing the plates from fully or partially separating, maintaining at least a pre-positioning by constraining a translational degree of freedom perpendicular to the plates. If the clamp exerts a large compressing force, the clamp may further fixate the relative orientation of the machines in the contact plane of the first and second flat plates. Alternatively and or additionally, a plurality of clamps may be employed to also engage the rims of the first and second flat plates, thereby also effectively preventing rotation of the first flat plate with respect to the second flat plate. Thereby a final alignment in the contact plane may be maintained.

In a further preferred embodiment of the present invention, the production system further comprises indication means, which are configured to indicate a final alignment of the feeding direction relative to the discharging direction and/or a final positioning of the discharging point with respect to the receiving point. Such an embodiment allows a fast check whether the defined final alignment and/or positioning is established, either already by coupling or by further adjustment after coupling. Particularly, when the orientation of the second processing machine can be adjusted in the coupled state, such as by a tilt-axis of the first flat plate. The indication means then allow fast identification whether the proper final alignment is established, thereby further speeding up the adjustment process, without the need to employ additional measurement tools such as a spirit level.

In a further preferred embodiment of the present invention, the indication means comprise a first indicator assembly, attached to the first processing machine, having a first indicator element, and a second indicator assembly, attached to the second processing machine, having a second indicator element. Preferably, each one of the first and second indicator elements is a notch provided in a substantially flat, at least approximately vertically arranged section of each one of the first and second indicator assemblies. When the first processing machine and the second processing machine are coupled, the first and second indicator elements are configured to be in close proximity in a at least approximately common vertical plane. The alignment of the first and second indicator elements indicates the defined final alignment of the processing or handling direction relative to the discharging direction and/or the defined final positioning of the discharging point with respect to the receiving point. Preferably, the notches extend are inclined with respect to a vertical axis with an angle of at least about 15° wherein their openings and their axis align with each other when both machines are in the correct position to each other.

Being in close proximity in a at least approximately common vertical plane, allows an operator situated next to the inventive production system to easily take a reading of the orientation indicated by the indicator elements. The position of the indicator elements in a common vertical plane indicates the defined final alignment of the feeding direction relative to the discharging direction in a horizontal plane. The indicator elements may for example be linear marks disposed on the indicator assemblies, configured to be located on a common line formed by the extensions of the linear marks, or at least be aligned in parallel, when the machines are in the defined final alignment in the horizontal plane. Thereby, the alignment of the indicator elements further indicates the final alignment of the machines in a vertical plane. When the indicator elements align on a common line, a distance between the indicator elements on that line may further indicate the final positioning of the discharging point and the receiving point.

Consistently with the approximately vertical and horizontal alignments of previously described features of the present invention, the sections are arranged to be approximately vertically aligned, when the production system is set up and its positioning fully adjusted. Prior to the adjustment, the corresponding sections may exhibit an angle to the vertical plane. Notches may be advantageous over other surface markings, such as painted marks or stickers, as they are insensitive to being unintentionally removed. Furthermore, notches that extend through the entire thickness of the corresponding sections of the indicator assemblies are visible from both sides of the indicator assemblies.

According to the present invention, there is also provided a processing machine, such as a clipping machine for sausage-shaped products, for performing a first processing step on a product to be produced. The processing machine discharges the processed product along a discharging direction to a discharging point. The processing machine comprises a first coupling assembly for releasably coupling the processing machine to a second coupling assembly of a downstream processing machine. The downstream processing machine having a receiving point for receiving the product discharged from the processing machine, said product being fed into the second processing machine from the receiving point along a feeding direction. When the first coupling assembly and the second coupling assembly are coupled with each other, the discharging direction of the processing machine and the feeding direction of the downstream processing machine are at least pre-aligned to each other and the discharging point of the processing machine and the receiving point of the downstream processing machine are at least prepositioned to each other. In other words, the processing machine may be equivalent to the first processing machine described in great detail above in relation to the inventive production system. The processing machine preferably further comprises some or all of the features as described in great detail above in relation to the production system.

According to the present invention, there is also provided a processing, such as a loading machine, for performing a processing step on a product discharged from an upstream processing machine. The processing machine has a receiving point for receiving the product, which is discharged from the upstream processing machine along a discharging direction to a discharging point, said product being fed into the processing machine from the receiving point along a feeding direction. The processing machine comprises a second coupling assembly for releasably coupling the processing machine to a first coupling assembly of the upstream processing machine. When the first coupling assembly and the second coupling assembly are coupled with each other, the discharging direction of the upstream processing machine and the feeding direction of the processing machine are at least pre-aligned to each other and the discharging point of the upstream processing machine and the receiving point of the processing machine are at least prepositioned to each other. In other words, the processing machine may be equivalent to the second processing machine described in great detail above in relation to the inventive production system. The processing machine preferably further comprises some or all of the features as described in great detail above in relation to the production system.

According to the present invention, there is also provided a coupling device for releasably coupling a first processing machine and a second processing machine. The first processing machine is configured to perform a first processing step on a product to be produced, the first processing machine discharging the processed product along a discharging direction to a discharging point. The second processing machine is configured to perform a second processing step on the product discharged from the first processing machine, the second processing machine (20) having a receiving point for receiving the product discharged from the first processing machine, said product being fed into the second processing machine from the receiving point along a feeding direction. The coupling device comprises a first coupling assembly attached to the first processing machine, and a second coupling assembly attached to the second processing machine, or vice versa. The coupling device is configured for releasably coupling the first processing machine and the second processing machine such that, when the first coupling assembly and the second coupling assembly are coupled with each other, the discharging direction of the first processing machine and the feeding direction of the second processing machine are at least pre-aligned to each other and the discharging point of the first processing machine and the receiving point of the second processing machine are at least prepositioned to each other. In other words, the coupling device may be equivalent to the coupling device described in great detail above in relation to the inventive production system. The coupling device preferably comprises some or all of the features as described in great detail above in relation to the production system.

Further advantages and a preferred embodiment of the present invention will be described in the following together with the drawings listed below.

Expressions such as "up", "down", "above", "below", "on top", "beneath" or analogous expressions for a relative spatial position along a vertical or horizontal axis of the coordinate system are defined relative to a viewer's perspective on the drawings, with the depicted orientation of the machines substantially coinciding with the upright position of the machines before, during or after coupling, wherein the machines are typically set up on a production floor. Expression such as "down", "below", "beneath" or analogous expressions relate to a relative position closer to the floor, and "up", "above", "on top" or analogous expressions relate to a relative position further away from the floor.

Expressions such as "in front", "behind", "left" and "right" or analogous expressions for a spatial position relative to a viewer are defined relative to the viewer's perspective view on the drawings, wherein "in front" or analogous expressions relate to a relative position closer to the viewer, and "behind" or analogous expressions relate to a relative position further away from the viewer.

If not indicated differently, other expressions relating to absolute and spatial positions or orientations of depicted parts, elements, assemblies, regions, points, directions or planes relate to the coordinate system, its axes and the planes defined therein.

### BRIEF DESCRIPTION OF THE DRAWINGS

- Fig. 1:: is a perspective view of a production system according to the present invention, with the first and second processing machine coupled to each other;
- Fig. 1A:: is a detailed partial side view of the coupled first and second coupling assemblies of the production system of Fig. 1;
- Fig. 1B:: is a detailed perspective view of the coupled first and second coupling assemblies of the production system of Fig.1;
- Fig. 2A:: is a detailed side view of a first and second coupling assembly of the production system of Fig. 1, in a state prior to coupling;
- Fig. 2B:: is a detailed perspective view of the first and second coupling assembly as depicted in Fig. 2A;
- Fig. 3:: is a detailed perspective view from below on the second coupling assembly of Figs. 2A and 2B;
- Fig. 4A:: is a perspective partial view on the first processing machine of the production system of Fig. 1;
- Fig. 4B:: is a detailed bottom view of the first processing machine of Fig. 4A; and
- Fig. 5:: is a detailed side view of the indication means of the production system of Fig.1, indicating the final alignment of the processing machines of Fig. 1.

### DETAILED DESCRIPTION OF THE PREFERRED EMBODIMENT DEPICTED IN THE DRAWINGS

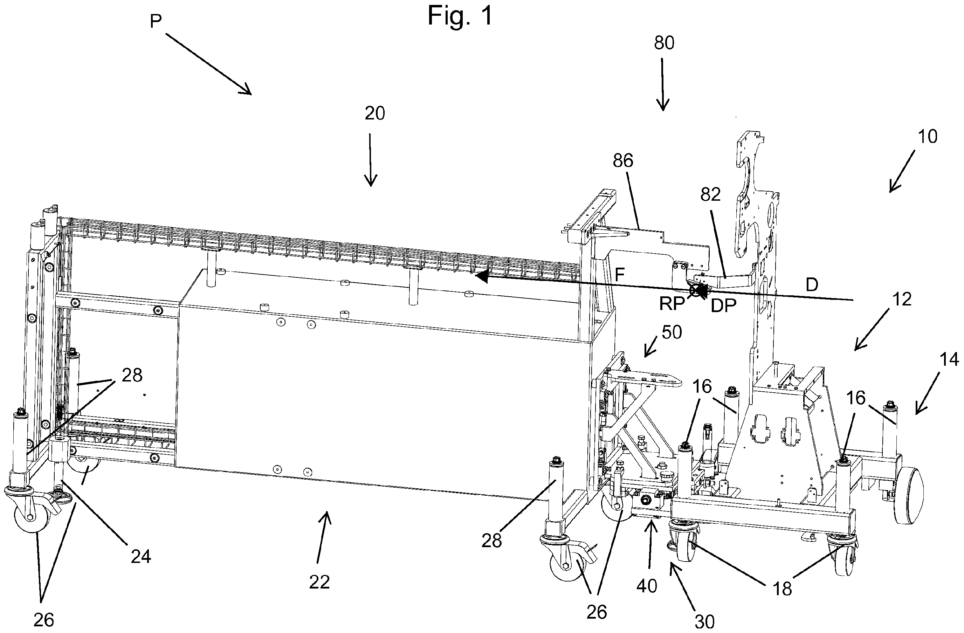

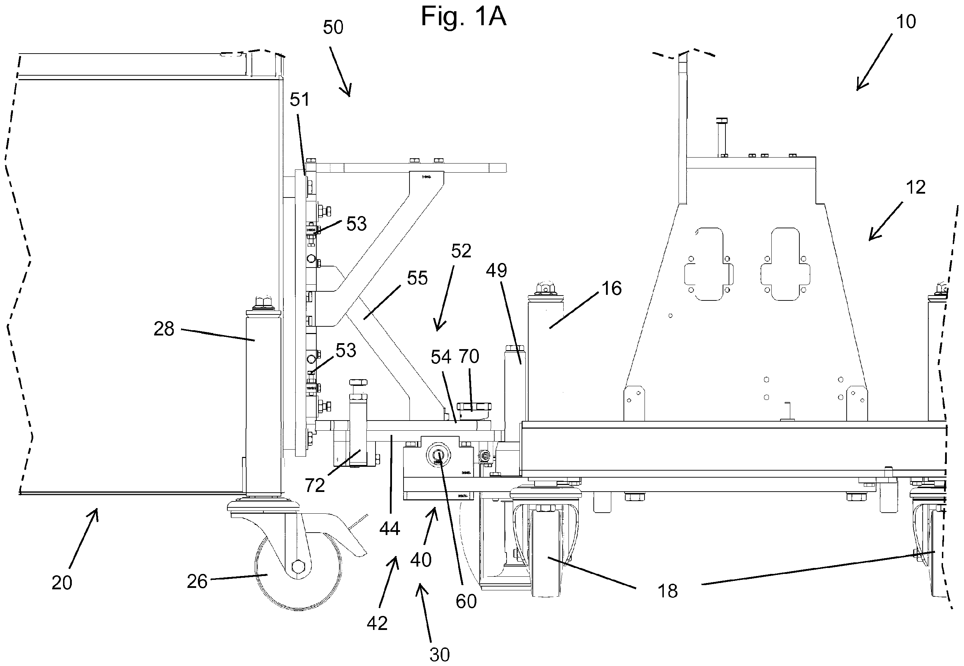

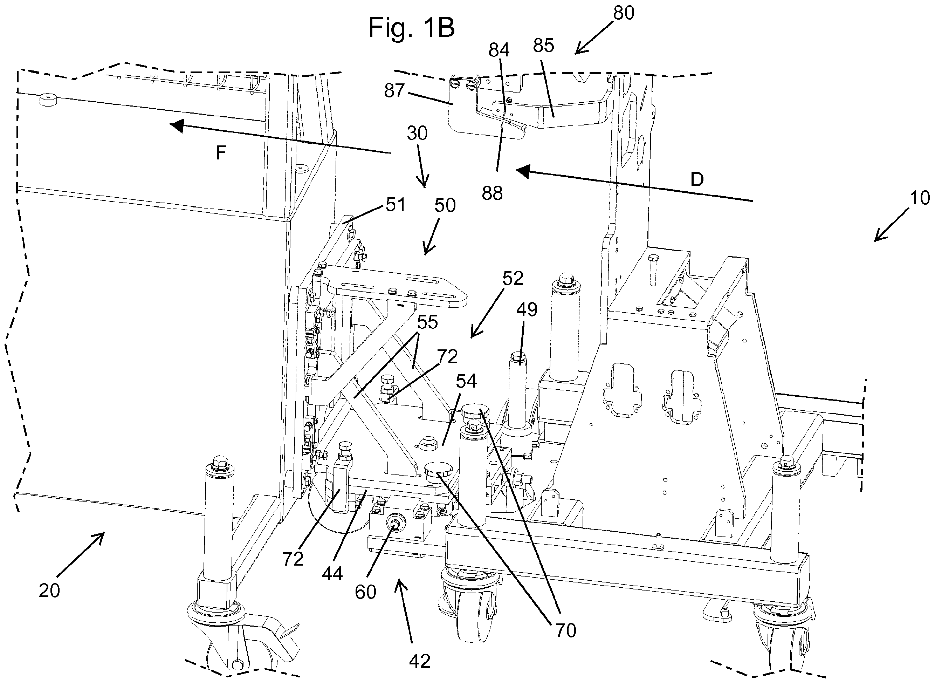

A preferred embodiment of production system P according to the present invention is depicted in a perspective view in Fig. 1. Production system P comprises a first processing machine 10 and a second processing machine 20 which are coupled by a coupling device 30. First processing machine 10 of depicted production system P is a clipping machine for producing sausage-shaped products, like sausages, which are discharged from first processing machine 10 to a discharging point DP in a discharging direction D. In Fig. 1, only a portion of a frame 12 of the processing machine 10 is shown, while clipping means, displacement means, filling means and the like are omitted for better view on other elements of production system P. First processing machine 10 further comprises an undercarriage 14, attached to the bottom of frame 12, with four wheels attached to vertically extendible feet 16. Two steerable wheels 18 are provided, which can be locked at any steering angle both against further steering and/or rolling. Discharging direction D defines a longitudinal axis of machine 10, and a final absolute orientation of discharging direction D, required to commence production of depicted second machine 10, is at least substantially horizontal. The absolute orientation of discharging direction D can, amongst other possibilities disclosed herein, be adjusted by extending or retracting feet 16.

Second processing machine 20 of depicted production system P is a loading machine for loading the sausage-shaped products onto a rod-like element, like a smoking-rod (not depicted). Second machine 20 receives the sausage-shaped products from first machine 10 at a receiving point RP, and feeds them onto a smoking-rod along a feeding direction F. Only a portion of a frame 22 of second machine 20 is shown for better view on other elements of production system P. Second machine 20 further comprises a single extendible foot 24, attached to frame 22 at a downstream end of the machine 20. Four wheels 26 are attached to frame 22 and via vertically extendible feet 28. Single extendible foot 24 is at least approximately arranged vertical plane, extending along a longitudinal axis of machine 20, in which a center of mass of second machine 20 is at least approximately located. The center of mass can slightly shift with respect to the vertical plane, for example due to off-center loading of sausage-shaped products. Said longitudinal axis of second machine 20 is coincident with feeding direction F and a final absolute orientation of feeding direction F, required to commence production of depicted second machine 20, is at least substantially horizontal. The absolute orientation of feeding direction F can, amongst other possibilities disclosed herein, be adjusted by extending or retracting feet 28.

Fig. 1 shows a configuration of production system P, in which discharging direction D and feeding direction F are required to exhibit an at least substantially coaxial final alignment in order to ensure reliable transfer of sausage-shaped products. Discharging point DP and receiving point RP in the depicted production system P are coincident in their final positioning, they are not necessarily defined by the structural features of first machine 10 and second machine 20. In the depicted configuration, they are defined by the intersection of discharging direction D and feeding direction F. The final positioning of discharging point DP and receiving point RP in the depicted production system P, is therefore defined by the final alignment of feeding direction F and discharging direction D. However, as discussed in great detail above, other final alignments, final positionings and definitions thereof are possible.

Coupling device 30 comprises a first coupling assembly 40, attached to a downstream end and toward a bottom of frame 12 of first machine 10, and a second coupling assembly 50, attached to an upstream end and toward a bottom of frame 22 of second machine 20. First coupling assembly 30 and second coupling assembly 40 are coupled with each other, and configured to at least pre-align feeding direction F and discharging direction D, and further to at least pre-position discharging point DP and receiving point RP. In the depicted configuration, feeding direction F and discharging direction D are in their final alignment and discharging point DP and receiving point RP are in their final positioning.

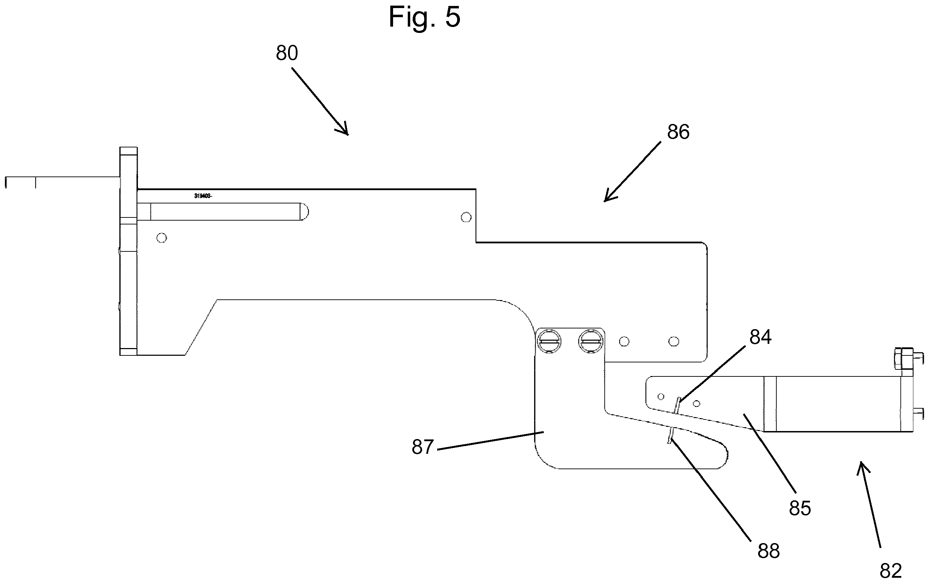

Production system P further comprises indication means 80, comprising of a first indicator assembly 82, attached to horizontally extending from a downstream end of first machine 10, having a first indicator element 84. Indication means 80 further comprise second indicator assembly 86, attached to and horizontally extending from an upstream end of second machine 20, further having second indicator element 88. Indicator elements 86 and 88 are non-vertical, i.e. diagonal, notches in substantially flat, and at least approximately vertically arranged sections 85 and 87 of each one of indicator assemblies 82 and 86. The diagonal angle of notches is at last substantially 15°. When vertically arranged flat sections 85 and 87 form a common, vertical plane, a final alignment is indicated in the horizontal plane. The coaxial alignment of diagonal notches of indicator elements 86 and 88 then indicates the final alignment of discharging direction D and feeding direction F in the vertical plane, and at least the defined positioning of discharging point DP and receiving point RP in a plane perpendicular to the notches. Fig. 5 is a detailed side view of indication means 80 in the final alignment. Indication means 80 may be integral to machines 10 and 20, or removably attached by attachment means, such as bolts. Elements of indication means 80 may be replaced to indicate differently defined final alignments, e.g. when switching a machine of production system P.

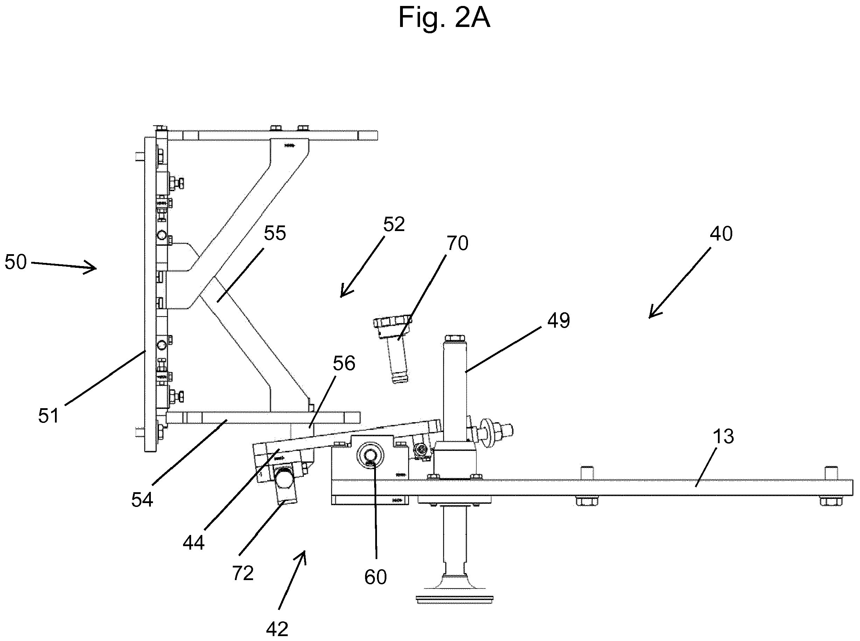

Fig. 1A is a detailed side view of production system P of Fig. 1, and shows first coupling assembly 40 coupled to second coupling assembly 50. Fig. 1B is a detailed perspective view of the same detail of production system P. First coupling assembly 40 further comprises first engagement unit 42, which engages with a corresponding second engagement unit 52 of second coupling assembly 50. The engagement at least pre-aligns discharging direction D and feeding direction F, as well as prepositions discharging point DP and receiving point RP, the functioning of which will be described below, in particular with reference to Figs. 2A through 4B.

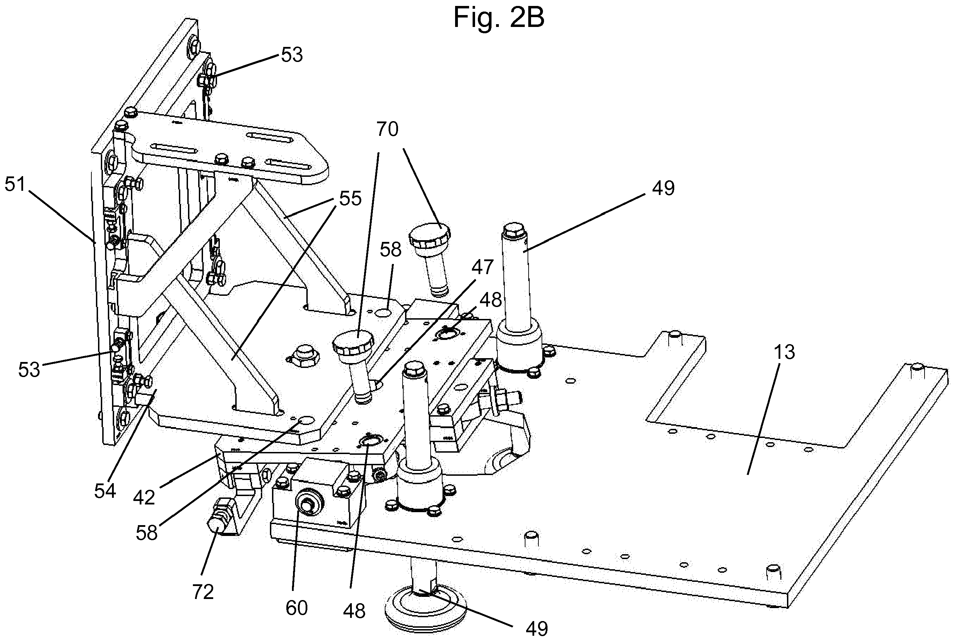

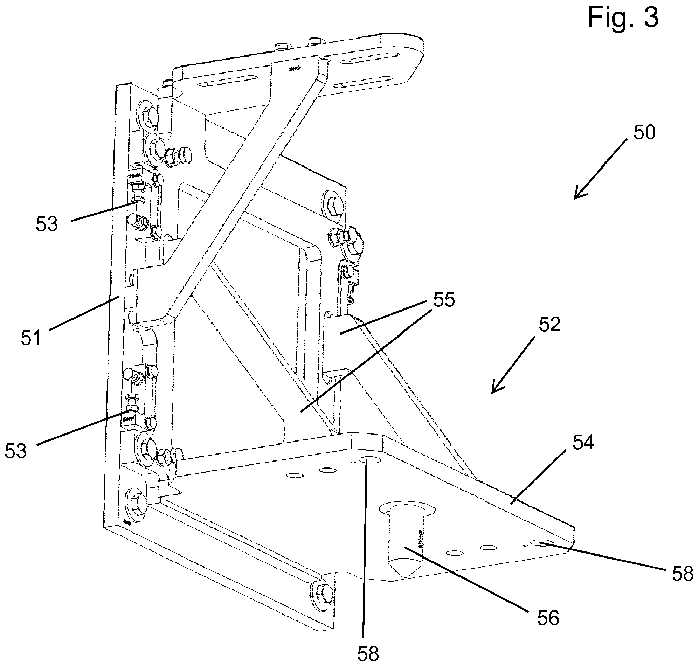

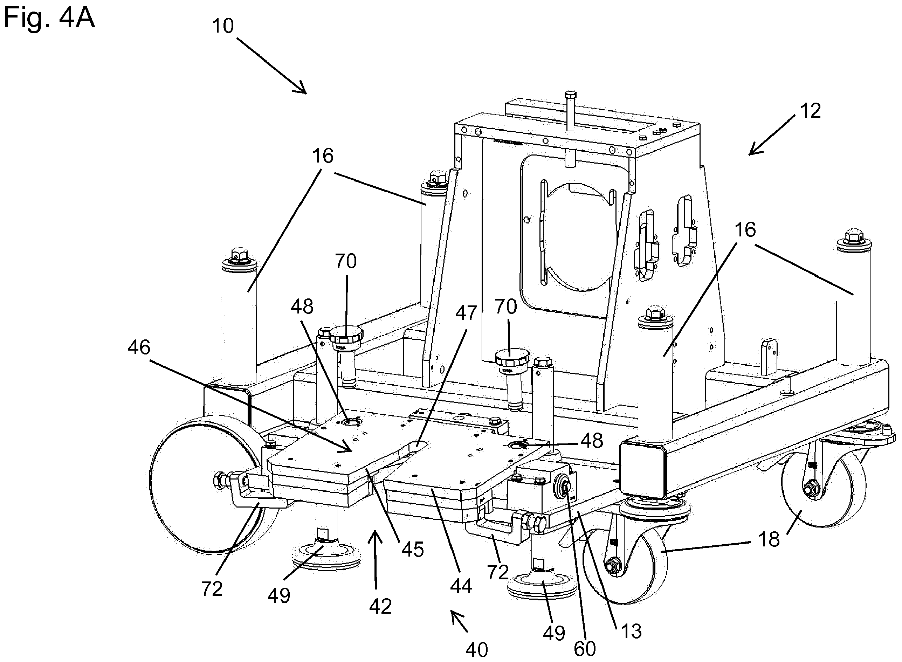

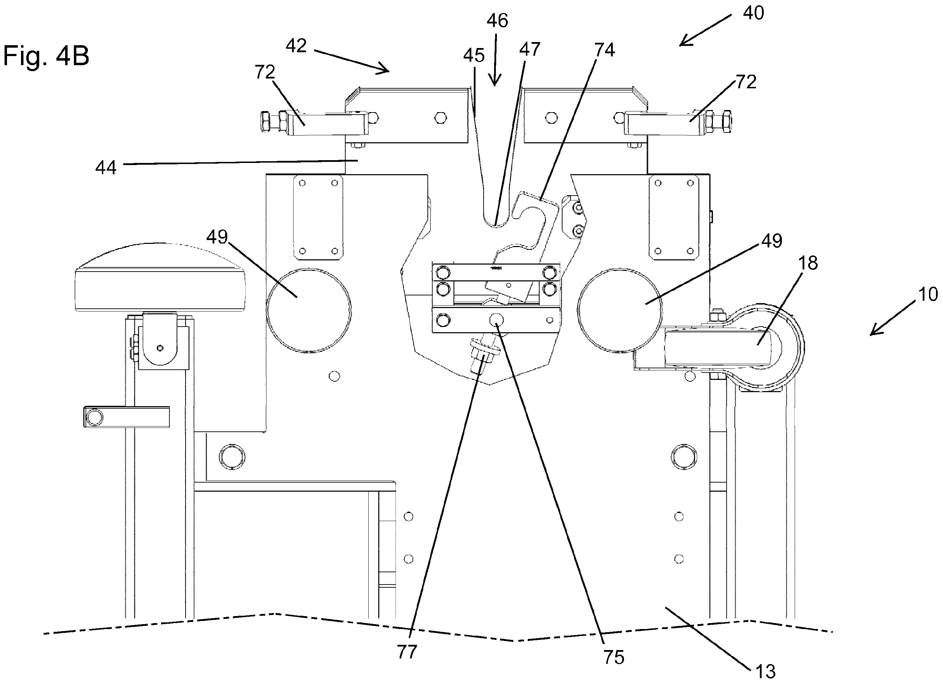

Fig. 2A is a side view of first coupling assembly 40 and second coupling assembly 50 of production system P, in a state prior to coupling. The majority of parts of machines 10 and 20 have been omitted. Fig. 2B is a perspective view on the detail of Fig. 2A. Fig. 3 is a bottom perspective view of second coupling assembly 50. Fig. 4A is a perspective view of first machine 10, wherein parts of frame 12 have been omitted. Fig. 4B is a detailed bottom view of first machine 10.

As can be inferred from Figs. 2A, 2B and 3, in the depicted embodiment, second coupling assembly 50 is attached to second machine 20 via substantially horizontal back plate 51, which is bolted onto frame 22. The relative alignment of coupling assembly 50 with respect to machine 20 can be adjusted by adjustment means 53, so as to align corresponding pairs of surfaces, configured to be arranged horizontally and respectively vertically. It might, however, be advantageous, to attach coupling assembly 50, in such way that by means of attachment proper alignment is provided, eliminating the need for further adjustment. As can be inferred from Figs. 2A and 2B, first coupling assembly 40 of the depicted embodiment is an integral part of bottom plate 13 of frame 12 of first machine 10. Bottom plate 13 is substantially parallel to discharging direction D and configured to be arranged at least substantially horizontally.

First engagement unit 42 comprises a flat plate 44, attached to a downstream end of bottom plate 13 by means of tilt-axis 60. Tilt-axis 60 is arranged parallel to bottom plate 13, and substantially perpendicular to the projection of discharging direction D in a substantially horizontal plane defined by tilt-axis 60. Tilt-axis 60 is further preferably arranged so as to intersect a central normal axis of flat plate 44. Tilt-axis 60 allows flat plate 44 to tilt out of parallel alignment with bottom plate 13, so as to be able to form an angle with bottom plate 13. The angle may be in the range of 0° to 90°, particularly between 0° and 45° or 0° and 30°, or between 0° and 15°, more particularly between 0° and 7°, or between 0° and any intermediate angle up to 90°. Tilt-axis 60 may be lockable at any attainable tilt-angle of flat plate 44 with respect to bottom plate 13.

First engagement unit 42 further comprises a recess 46, formed centrally in flat plate 44. In the depicted embodiment, recess 46 is a tapered notch, extending through the entire thickness of plate 44, and in a direction substantially parallel to discharging direction D, with an opening toward a downstream edge of plate 44 which faces second machine 20 prior to coupling. Taper 45 may form an opening angle of 45°, 30°, more particular 15°, or any intermediate angle between 0° and 45°. Taper 45 is substantially symmetrically arranged to a vertical plane. The tapered notch ends in a semi-circular tip 47.

Second engagement unit 52 further comprises a second flat plate 54, perpendicularly attached to back plate 51, and extending in an upstream direction therefrom. Flat plate 54 is supported with struts 55, which diagonally connect back plate 51 and flat plate 54. A protrusion 56, in the form of a kingpin, protrudes substantially perpendicularly downward from a center of flat plate 54. The kingpin is configured to be centered by the tapered notch of first flat plate 44, i.e. the width of the opening of the tapered notch is greater than the diameter of the kingpin. The width of the opening then reduces due to taper 45 toward the upstream end of the notch formed by semi-circular circular tip 47, which has substantially the same diameter as the kingpin, and can thus coaxially center the kingpin. Semi-circular tip 47 is arranged substantially at the center of flat plate 44. In the depicted configuration the kingpin has length exceeding the depth of the tapered notch.

Second flat plate 54 is configured to rest on top of first flat plate 44, as depicted in Figs. 1, 1A and 1B.

Therefore, at least a pre-alignment and a prepositioning can be achieved when first engagement unit 42 engages second engagement unit 52, as will be described in the following. In a first step of a typical application of depicted production system P, first machine 10 is set up at a location on a production floor in a defined orientation. The defined orientation of first machine 10 in the depicted configuration is preferably such that, discharging direction D is substantially horizontally. More preferably, bottom plate 13 is arranged parallel to a horizontal plane. The described initial orientation can be adjusted by extending or retracting feet 16. First coupling assembly 40 further comprises two symmetrically arranged and vertically extendible feet 49, provided in a downstream region of bottom plate 13, configured to support the load applied to first coupling assembly 40 by second coupling assembly 50. They may also be used to horizontally level first machine 10. Then, feet 49 may be extended in such way that by horizontally leveling machine 10, the downstream pair of its wheels is lifted off the floor. Thus, machine 10 only rests on feet 49 and the upstream pair of its wheels, establishing a more defined load path for the masses supported. At latest, feet 49 are lowered to contact the production floor, after machine 10 has been horizontally levelled. Their contact patches with the production floor can also aid in holding machine 10 in place due to frictional forces.

First flat plate 44 is tilted around tilt-axis 60, so that its top surface is facing partially away from first machine 10 in a downstream direction, at the maximum angle provided by the range of movement of tilt-axis 60. In the depicted embodiment the angle amounts to 7°. Weights 49 may be attached to a downstream end of plate 44, to bias plate 44 to face partially away from first machine 10.

In a second step, machine 20 is placed in rough alignment with machine 10 downstream thereof. Upstream end of machine 20 faces downstream end of machine 10. Extendible feet 26 of second machine 20 are adjusted such that a bottom surface of second flat plate 54 is vertically positioned no higher than the expected contact plane with first flat plate 44, and no lower than the opening of the tapered notch of first flat plate 44. Therefore, a range of possible relative vertical positions of second flat plate 54 is provided, which allow successful coupling of the two machines, without the need to precisely pre-align second machine 20 prior to coupling. Such a possible relative vertical position of the respective upstream and downstream ends of the machines prior to coupling is depicted in Figs. 2A and 2B.

Second machine 20 is then, in its entirety, moved upstream toward first machine 10. Taper 45 receives and guides the kingpin in an upstream direction, while second flat plate 54 slides onto first flat plate 44 until the kingpin abuts semi-circular tip 47. When second flat plate 54 slides onto first flat plate 44, first flat plate 44 is being tilted out of its initial tilting angle, until first flat plate 44 and second flat plate 54 form a parallel contact plane. When the vertical position of second flat plate 54 prior to coupling is lower than the contact plane thus formed, second machine 20 is lifted off its upstream wheels 26, such that a substantial portion of its weight rests on first flat plate 44 via second flat plate 54. Moreover, when first machine 10 was initially aligned such that bottom plate 13 is substantially horizontal, the contact plane thus formed is perpendicular to the longitudinal vertical plane of machine 10. In other words, the contact plane's orientation relative to the horizontal plane of the coordinate system is sufficiently described by the tilt angle relative to tilt-axis 60.

Thereby at least a pre-alignment between discharging direction D and feeding direction F is established. Taper 45 which guides the kingpin limits a potential misalignment in the vertical plane to substantially the angle of taper 45. The contact plane formed by second flat plate 54 resting on top of first flat plate 44, limits a potential misalignment in a horizontal plane to the tilt-angle provided by tilt-axis 60.

Moreover, at least a pre-positioning is established between discharging point DP and receiving point RP. The kingpin abutting semi-circular tip 47 defines a prepositioning, at least in the contact plane between flat plates 54 and 44. For most practical purposes, the portion of the weight of second machine 20 resting on top of first flat plate 44 via second flat plate 54, substantially prevents the kingpin from being pulled out of the tapered notch along its longitudinal axis. Therefore, the relative spatial positioning between machines 10 and 20 is defined at the constrained position of the kingpin, thus establishing at least a pre-positioning between discharging point DP and receiving point RP. The relative positioning between points DP and RP can now only be adjusted as a consequence of the leverage with respect to the still adjustable orientations around the longitudinal axis of the kingpin and tilt-axis 60. As can be inferred from Fig.1, discharging point DP and receiving point RP are located above coupling device 30, so as to be in close proximity or congruent with a vertical extension of a longitudinal axis of the kingpin. In many instances, the thus established pre-positioning is already within a sufficient tolerance to equate to a final positioning, as was described in great detail above.

The depicted embodiment of production system P further comprises fixation means to maintain at least partially the pre-alignment and/or the pre-positioning. Fig. 4B shows hook 74, which is rotatably attached to the bottom of flat first flat plate 44, by means of rotation axis 75, which is arranged in alignment with and upstream of the tapered notch. Hook 74 is configured so as to engage an exposed downstream portion of the circumference of the kingpin, when abutting semi-circular tip 47 of the tapered notch. Hook 74 may be linearly adjustable relative to its axis of rotation 75, by means of mechanism 77 to remove play when engaging the kingpin. Hook 74 can then engage and hold the kingpin centered with regard to semi-circular tip 47, preventing the kingpin from sliding back out of recess 46 along taper 45. Thereby, at least the pre-positioning with respect to the contact plane is maintained.

Moreover, as best visible, inter alia, in Figs. 1B and 2B, two C-shaped clamps 72 are rotatably attached to first flat plate 44 in a downstream region thereof. Clamps 72 can rotate around a substantially downstream extending axis, around a circumferential edge of first flat plate 44, thus being capable to enclose both flat plates 44 and 54 within its C-shape. Clamps 72 can thereby engage a top surface of second flat plate 54, and thereby prevent at least a separation of flat plates 54 and 44 perpendicularly to their contact plane. Thus, at least the pre-alignment within the contact plane, as well as the prepositioning perpendicular thereto is maintained. Depending on the clearances between flat plates 54 and 44 and clamps, the pre-alignment in the contact plane can further be constrained to within a more limited range of possible misalignment angles. This further constraint can also result in establishing the final alignment within the contact plane.

Once at least the pre-alignment and at least the pre-positioning is established by engagement units 42 and 52, final alignment means can arrange and/or fixate discharging direction D and the feeding direction F in the final alignment. In the depicted embodiment of production system P, final alignment means comprise horizontal alignment means for a final alignment in a horizontal plane, and vertical alignment means for a final alignment in a vertical plane.

In the depicted embodiment, horizontal alignment means comprise two pairs of corresponding bores 48 and 58, each configured to receive a corresponding alignment pin 70. Each pair of bores comprises a first, substantially vertical bore 48 in first flat plate 44, and a second, substantially vertical bore 58 of the same diameter in second flat plate 54. The bores are arranged so a first bore 48 and a corresponding second bore 58 can be coaxially aligned, if they are not already aligned by the given pre-alignment, the alignment can be established by rotating second machine 20 around the kingpin. The pairs of bores are arranged symmetrically to a longitudinally extending, central vertical plane of the machines, and located toward the upstream ends of flat plates 44 and 54. When both pairs of corresponding bores 48 and 58 align simultaneously, the final alignment within the contact plane of plates 44 and 54 is established. When first machine 10 is initially aligned so that bottom plate 13 is substantially horizontal, the final alignment in the contact plane then equates to the final alignment in a horizontal plane. By inserting both matching pins 70 into coaxially aligned bores 48 and 58, the final alignment is fixated. Pins 70 may comprise circumferential detents, engaging with corresponding elements of first flat plate 44, to releasably prevent them from being pulled out of bores 48 and 58. Pins 70 resting in bores 48 and 58 are depicted, inter alia, in Fig. 1B, and removed from bores 48 and 58 in an exploded view, inter alia, in Fig. 2B.

In the depicted embodiment, the vertical alignment means are comprised of tilt-axis 60 and extendible foot 22. The vertical alignment typically is the last step in aligning machines 10 and 20. After engaging units 42 and 52 are engaged, and a horizontal final-alignment is established by means of above described horizontal alignment means, discharging direction D and feeding direction F are typically still misaligned in a vertical plane. The misalignment typically stems from inclined production floors of production facilities, which is leveraged by the longitudinal extent of second machine 20 and the contact patches of the two wheels 26 of the downstream end with the floor. Production system P is preferably set up, such that second machine 20 is lifted off its upstream wheels 26, as was described above, resulting in the upstream end of machine 20 being supported solely by first flat plate 44. Then, downstream wheels 26 can be retracted, such that the downstream end of machine 20 is supported solely by single extendible foot 22. Its arrangement within the longitudinal vertical plane of second machine 20, which is perpendicular to tilt-axis 60 and within which a center of mass of second machine 20 is located, thus allows to tilt the entirety of machine 20 around tilt axis 60, until its final alignment in a vertical plane is established, by means of simply extending or retracting foot 22. The final alignment in the vertical plane may preferably be indicated, for example to an operator performing the adjustment, by indicator means 80. Once the final alignment is established, extendible foot 22 may be locked in its current state of extension, thereby fixating the final alignment.

A roll moment around the longitudinal axis of second machine 20 can be suppressed, due to the placement of foot 22 approximately within the plane of the center of mass of machine 20. During operation of production system P, the center of mass of machine 20 may shift, for example due to sausage-shaped products being loaded onto a smoking rod of second machine 20. However, the lateral extent of flat plates 44 and 54 is able to absorb some roll moment. Furthermore, a width of the contact patch of extendible foot 22 on the floor is also able to absorb some roll moment. Thus, machine 20 is effectively prevented from being tipped over.

The above detailed preferred embodiment of inventive production system, as depicted in the drawings, thus allows a time efficient set-up of production system P on a production floor. The set-up is particularly improved over the prior art by establishing a pre-alignment and a pre-positioning, when first and second engagement units and are established. Thus, only minor adjustments are required, to establish a final alignment and a final positioning. Moreover, the provided horizontal and vertical alignment means allow to independently establish the final alignment in a vertical and in a horizontal plane. Thus, the alignment within one plane does not interfere with the alignment in the respective other plane. The provided final alignment means may also reliably fixate the final alignment. The coupling device comprises a first and a second coupling assembly, each attached to a respective processing machine, configured to couple with each other. Thereby, a beneficial modularity can be realized. As is obvious from the detailed summary of the present invention, which provides ample design alternatives, which are particularly suited to replace or modify individual features of the depicted preferred embodiment, as well as various combinations thereof, a production system according to the present invention is not limited to the specific embodiment depicted in the drawings.

## Claims

1. A production system (P), comprising:
a first processing machine (10), such as a clipping machine for sausage-shaped products, for performing a first processing step on a product to be produced, the first processing machine (10) discharging the processed product along a discharging direction (D) to a discharging point (DP);
a second processing machine (20), such as a loading machine, for performing a second processing step on the product discharged from the first processing machine (10), the second processing machine (20) having a receiving point (RP) for receiving the product discharged from the first processing machine (10), said product being fed by the second processing machine (20) from the receiving point (RP) along a feeding direction (F); and
a coupling device (30) comprising a first coupling assembly (40) attached to the first processing machine (10) and a second coupling assembly (50) attached to the second processing machine (20) wherein the coupling device (30) is configured for releasably coupling the first processing machine (10) and the second processing machine (20) such that, when the first coupling assembly (40) and the second coupling assembly (50) are coupled with each other, the discharging direction (D) of the first processing machine (10) and the feeding direction (F) of the second processing machine (20) are at least pre-aligned to each other and the discharging point (DP) of the first processing machine (10) and the receiving point (RP) of the second processing machine (20) are at least prepositioned to each other.

2. Production system (P) of claim 1, wherein
the first coupling assembly (40) comprises a first engagement unit (42) and the second coupling assembly (50) comprises second engagement unit (52), the first (42) and second (52) engagement units configured to engage with each other when the first coupling assembly (40) and the second coupling assembly (50) are coupled to each other, at least for pre-alignment of the discharging direction (DD) and the feeding direction (FD), as well as at least for prepositioning of the discharging point (DP) and receiving point (RP).

3. Production system (P) of claim 2, wherein
the first engagement unit (42) comprises a recess (46), and the second engagement unit (52) comprises a protrusion (56), and wherein the recess (46) is configured to receive and center the protrusion (56).

4. Production system (P) of claim 3, wherein
the recess (46) of the first engagement unit (42) comprises a tapered notch, which is provided in a first flat plate (44), the first flat plate (44) is configured to be arranged at least approximately horizontally, the tapered notch comprising an opening toward an edge of the first flat plate (44),
the protrusion (56) is a kingpin protruding at least substantially perpendicularly downward from a second flat plate (54), the second flat plate (54) being configured to be arranged at least approximately horizontally; and
the kingpin is configured to be centered in the recess (46) by inserting the kingpin along the tapered notch, and the second flat plate (54) is configured to rest on top of the first flat plate (44), thereby forming a contact plane.

5. Production system (P) of any of claims 1 to 4, wherein
the production system (S) further comprises final alignment means for arranging and/or fixating the discharging direction (D) of the first processing machine (10) and the feeding direction (F) of the second processing machine (20) relative to each other in a final alignment, when the first coupling assembly (40) and the second coupling assembly (50) are coupled with each other.

6. Production system (P) of claim 5, wherein the final alignment means comprise:
horizontal alignment means (58, 48, 70), configured to establish and/or fixate a final alignment of the discharging direction (D) relative to the feeding direction (F) in a horizontal plane; and
vertical alignment means (24, 60), configured to establish and/or fixate a final alignment of the discharging direction (D) relative to the feeding direction (F) in a vertical plane.

7. Production system (P) of claim 6, wherein
the horizontal alignment means (58, 48, 70) comprise at least two pairs of corresponding bores (58, 48), wherein each pair of the pair of bores (58, 48) comprises a first at least approximately vertical bore (48) in the first flat plate (44) and a second at least approximately vertical bore (58) in the second flat plate (56), wherein the corresponding first and second bores (58, 48) are configured to be coaxially aligned, such that all of the at least two pairs of bores (58, 48) are coaxially aligned simultaneously,
and wherein each pair of the at least two pairs of bores (58, 48) is configured to receive a corresponding alignment pin (70), configured to removably secure the coaxial alignment of the first and second bore of the pair of bores (58, 48).

8. Production system (P) of claim 6 or 7, wherein
the vertical alignment means (24, 60) comprise a tilt-axis (60) and an adjustment mechanism (24), wherein
the tilt-axis (60) is arranged in a at least approximately horizontal plane and further arranged so as to be perpendicular at least to a projection of the discharging direction (D) and/or feeding direction (F) in the approximately horizontal plane; the tilt-axis (60) being attached to the first coupling assembly (40), such that the first flat plate (44) is tiltable around the tilt axis (60) with respect to the first processing machine (10), and
the adjustment mechanism (24) is configured to adjust a tilt angle of the first flat plate (44) with respect to the horizontal plane, thereby adjusting the orientation of the discharging direction (D) relative to the feeding direction (F) in a vertical plane.

9. Production system (P) of claim 8, wherein the adjustment mechanism (24) comprises an extendible foot, at least approximately vertically aligned and attached to a downstream end of the second machine (20), preferably wherein only a single extendible foot is provided, and wherein the single extendible foot is at least approximately arranged in a vertical plane, which is perpendicular to the tilt axis (60) and within which a center of mass of the second machine (20) is located.

10. Production system (P) of any of claims 1 to 9, further comprising fixation means (70, 72, 74), configured to at least partially maintain at least the pre-alignment of the discharging direction (D) with respect to the feeding direction (F) and/or to at least partially maintain at least the prepositioning of the discharging point (DP) with respect to the receiving point (RP).

11. Production system (P) of any of claims 1 to 10, further comprising indication means (80), which are configured to indicate a final alignment of the feeding direction (F) relative to the discharging direction (D), and/or a final positioning of the discharging point (DP) with respect to the receiving point (RP).

12. Production system (P) of claim 11, wherein
the indication means (80) comprise a first indicator assembly (82) attached to the first processing machine (10), having a first indicator element (84), and a second indicator assembly (86) attached to the second machine (20), having a second indicator element (88); preferably each one of the first and second indicator elements (84, 88) is a notch provided in a substantially flat, and at least approximately vertically arranged section of each one of the first and second indicator assemblies (82, 86); and
when the first processing machine (10) and the second machine (20) are coupled, the first and second indicator elements (84, 88) are configured to be in close proximity in a at least approximately common vertical plane, and wherein the alignment of the first and second indicator elements (84, 88) indicates the defined final alignment of the feeding direction (F) relative to the discharging direction (D) and/or the defined final positioning of the discharging point (DP) with respect to the receiving point (RP).

13. A processing machine (10), such as a clipping machine for sausage-shaped products, for performing a first processing step on a product to be produced, the processing machine (10) discharging the processed product along a discharging direction (D) to a discharging point (DP);
the processing machine (10) comprising a first coupling assembly (40) for releasably coupling the processing machine (10) to a second coupling assembly (50) of a downstream processing machine (20), the downstream processing machine (20) having a receiving point (RP) for receiving the product discharged from the processing machine (10), said product being fed into the second processing machine (20) from the receiving point (RP) along a feeding direction (F);
wherein when the first coupling assembly (40) and the second coupling assembly (50) are coupled with each other, the discharging direction (D) of the processing machine (10) and the feeding direction (F) of the downstream processing machine (20) are at least pre-aligned to each other and the discharging point (DP) of the processing machine (10) and the receiving point (RP) of the downstream processing machine (20) are at least prepositioned to each other,
the processing machine (10) preferably further comprising the features according to any of claims 2 to 12.

14. A processing machine (20), such as a loading machine, for performing a processing step on a product discharged from an upstream processing machine (10), the processing machine (20) having a receiving point (RP) for receiving the product, which is discharged from the upstream processing machine (10) along a discharging direction (D) to a discharging point (DP), said product being fed into the processing machine (20) from the receiving point (RP) along a feeding direction (F);
the processing machine (20) comprising a second coupling assembly (50) for releasably coupling the processing machine (20) to a first coupling assembly (40) of the upstream processing machine (10);
wherein when the first coupling assembly (40) and the second coupling assembly (50) are coupled with each other, the discharging direction (D) of the upstream processing machine (10) and the feeding direction (F) of the processing machine (20) are at least pre-aligned to each other and the discharging point (DP) of the upstream processing machine (10) and the receiving point (RP) of the processing machine (20) are at least prepositioned to each other,
the processing machine (20) preferably further comprising the features according to any of claims 2 to 12.

15. A coupling device (30) for releasably coupling a first processing machine (10) and a second processing machine (20), the first processing machine (10) configured for performing a first processing step on a product to be produced, the first processing machine (10) discharging the processed product along a discharging direction (D) to a discharging point (DP); the second processing machine (20) configured for performing a second processing step on the product discharged from the first processing machine (10), the second processing machine (20) having a receiving point (RP) for receiving the product discharged from the first processing machine (10), said product being fed into the second processing machine (20) from the receiving point (RP) along a feeding direction (F); the coupling device (30) comprising:
a first coupling assembly (40) attached to the first processing machine (10), and
a second coupling assembly (50) attached to the second processing machine (20),
wherein the coupling device (30) is configured for releasably coupling the first processing machine (10) and the second processing machine (20) such that, when the first coupling assembly (40) and the second coupling assembly (50) are coupled with each other, the discharging direction (D) of the first processing machine (10) and the feeding direction (F) of the second processing machine (20) are at least pre-aligned to each other and the discharging point (DP) of the first processing machine (10) and the receiving point (RP) of the second processing machine (20) are at least prepositioned to each other,
the coupling device (30) preferably further comprising the features of any of claims 2 to 10.
